# EUROPÄISCHE PATENTSCHRIFT

(11) **EP 1 321 755 B1**
(45) Veröffentlichungstag und Bekanntmachung des Hinweises auf die Patenterteilung: **31.05.2017**
(21) Anmeldenummer: 02025489.2
(22) Anmeldetag: 15.11.2002
(51) Int. Cl.: G01M 1/22, G01M 1/32

(54) **Verfahren und Vorrichtung zum Auswuchten eines Kraftfahrzeugrades beim Eindrehen des Rads**
Method and device for balancing a vehicle wheel by rotating the wheel
Méthode et dispositif pour équilibrer une roue de véhicule en tournant la roue

(30) Priorität: 12.12.2001 DE 10160955
(43) Veröffentlichungstag der Anmeldung: 25.06.2003
(73) Patentinhaber: Snap-on Equipment GmbH, 64319 Pfungstadt (DE)
(72) Erfinder: Rothamel, Karl, 64372 Ober-Ramstadt (DE); Lenhardt, Lorenz, 64347 Griesheim (DE)
(74) Vertreter: Eisenführ Speiser

(56) Entgegenhaltungen:
- EP-A- 0 642 008
- EP-A- 1 114 989
- DE-A- 19 636 268
- US-A- 4 085 619
- US-A1- 2001 007 208
- US-A1- 2001 013 250
- US-B1- 6 422 074

## Beschreibung

Die Erfindung betrifft ein Verfahren zum Eindrehen eines an einer Auswuchtmaschine drehgelagerten und mittels eines Elektromotors antreibbaren Rotors, insbesondere Kraftfahrzeugrades nach dem Oberbegriff des Patentanspruches 1 sowie eine Vorrichtung nach dem Oberbegriff des Patentanspruches 7.

### [Stand der Technik]

Bei einem derartigen aus der DE 196 36 268 C2 bekannten Verfahren wird der Rotor, nachdem der Unwuchtausgleich in einer ersten Ausgleichsebene durchgeführt wurde, erneut angetrieben und nach dem Abschalten des Antriebs so abgebremst, dass der resultierende Bremsweg dem noch verbleibenden Differenzwinkel bis zur zweiten Unwucht-Ausgleichsposition entspricht. Das Abbremsen des Rotors kann durch Umkehrung des Drehmoments des Elektromotors, der zum Antrieb der Hauptwelle der Auswuchtmaschine dient, bewirkt werden.

Aus der DE 100 00 235 A1 ist eine Auswuchtmaschine bekannt, deren Hauptwelle mit einem Einphasen-Wechselstrommotor angetrieben wird, wobei zwei Statorwicklungen vorgesehen sind, die mit einem Phasenunterschied von 90° mit Strom versorgt werden. Der Phasenunterschied der Stromversorgung wird durch wenigstens einen Kondensator bewirkt, der je nach Drehrichtung mit einer der beiden Statorwicklungen in Reihe geschaltet werden kann.

### [Aufgabe der Erfindung]

Aufgabe der Erfindung ist es, ein Verfahren und eine Vorrichtung der eingangs genannten Art zu schaffen, mit welchen ein einfaches Eindrehen des Rotors aus einer angehaltenen Position, insbesondere Unwucht-Ausgleichsposition, in welcher ein Unwuchtausgleich schon durchgeführt wurde, in eine nachfolgende Unwucht-Ausgleichspositon in einfacher Weise erreicht wird.

Diese Aufgabe wird beim Verfahren erfindungsgemäß durch die kennzeichnenden Merkmale des Patentanspruches 1 und eine Vorrichtung gemäß Anspruch 5 gelöst. Beim Verfahren wird der Rotor zum Eindrehen in die nächste Unwucht-Ausgleichsposition bei ausgeschaltetem Elektromotor durch eine von außen einwirkende Kraft, welche insbesondere von einer Bedienperson beispielsweise von Hand in eine frei auslaufende Drehung angetrieben. Während dieser frei auslaufenden Drehung wird der Elektromotor zur Erzeugung eines der Drehrichtung des Rotors entgegengesetzt wirkenden Gegendrehmoments eingeschaltet. Die Einschaltung erfolgt in der Weise, dass der durch das Gegendrehmoment bewirkte Bremsweg dem Drehwinkel entspricht, der bis zur Unwucht-Ausgleichsposition zurückgelegt wird. In der Ausgleichsposition wird der Elektromotor ausgeschaltet.

Der Drehwinkel, bei dem das Einschalten des Gegendrehmoments erfolgt, wird aus der Bremswirkung, welche beim Abbremsen des Rotors in die vorherige Stopposition, insbesondere der Unwucht-Ausgleichsposition ermittelt wurde, und der momentanen Drehzahl (jeweilige Ist-Drehzahl) bei der frei auslaufenden Drehung des Rotors bestimmt.

Der Wechselstrommotor wird beim Antrieb der Hauptwelle der Auswuchtmaschine zum Antreiben des Rotors auf die für die Unwuchtmessung geeignete Messdrehzahl zu bringen, gesteuert von einen Wechselspannungssteller mit Strom versorgt. Die Statorwicklungen des Wechselstrommotors werden dabei vom Hochlauf auf die Messdrehzahl als auch beim Abbremsen des Motors, bei welchem ein Drehmoment erzeugt wird, mit Wechselstrom versorgt. Hierzu ist der Wechselspannungssteller vorgesehen, bei welchem sowohl der Längsschalter als auch der Kommutierungsschalter aus zwei anti-seriell geschalteten Halbleiterschaltern gebildet sind. Geeignete Halbleiterschalter sind Leistungsschalter, insbesondere IGBTs oder MOSFETs. Der Wechselstrommotor ist vorzugsweise als Einphasen-Wechselstrommotor ausgebildet, der zwei Statorwicklungen aufweist, die mit einem insbesondere 90°-Phasenunterschied mit Strom versorgt werden.

Die Halbleiterschalter des Wechselspannungsstellers werden, gesteuert von einer Pulsweitenmodulation (PWM), ein- und ausgeschaltet. Durch das Tastverhältnis und die Taktfrequenz der Pulsweitenmodulation kann nicht nur der Hochlauf des Rotors auf Messdrehzahl gesteuert werden, sondern es kann auch die Bremswirkung beim Erzeugen des Drehmoments so eingestellt werden, dass der Rotor, insbesondere in der jeweiligen Ausgleichsposition angehalten wird. Dies gilt auch für den Fall, bei welchem der Rotor nach dem Ausgleichsvorgang in einer ersten Ausgleichsposition gezielt in eine zweite Ausgleichsposition gebracht wird, wobei der Rotor durch eine von außen durch eine Bedienperson bewirkte Kraft, insbesondere von Hand in die frei auslaufende Drehung versetzt wird und der gesteuerte Bremsvorgang eingeschaltet wird.

Durch das Abbremsen mit Hilfe eines durch Wechselstrom erzeugten Gegendrehmoments erreicht man eine bedeutend höhere Bremswirkung als beim Zuführen von Gleichstrom zum Motor beim Abbremsen des Rotors.

Man erzielt daher bei der Erfindung ohne zusätzliche Einbauten die Wirkung einer Positionsbremse, mit welcher der Rotor in der jeweils gewünschten Position, insbesondere Ausgleichsdrehwinkelposition angehalten wird.

### [Beispiele]

Anhand der Figuren wird die Erfindung noch näher erläutert.

Es zeigt
- Fig. 1: in Blockschaltbilddarstellung ein Ausführungsbeispiel der Erfindung; und
- Fig. 2: ein Diagramm zur Erläuterung der Wirkungsweise des in Fig. 1 dargestellten Ausführungsbeispiels.

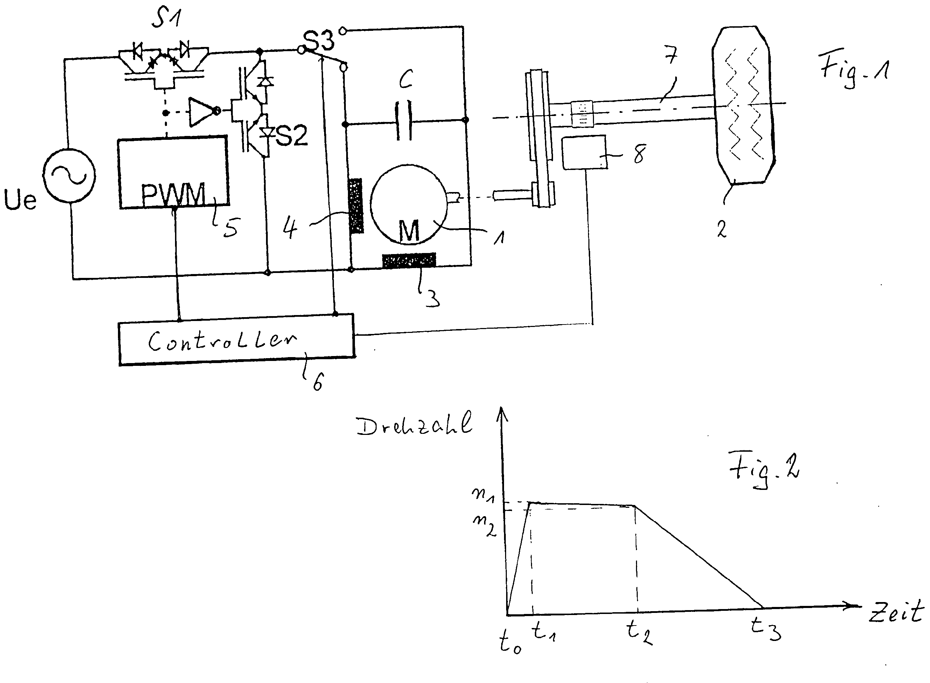

Im Ausführungsbeispiel ist eine Hauptwelle 7 einer Auswuchtmaschine dargestellt, welche von einem Elektromotor 1 über ein Getriebe, beispielsweise Riementrieb antreibbar ist. Der Elektromotor ist als Wechselstrommotor, insbesondere Einphasen-Wechselstrommotor ausgebildet, wie er beispielsweise aus der DE 100 00 235 A1 bei einer Radauswuchtmaschine bekannt ist. Auf die Hauptwelle 7 der Auswuchtmaschine ist in bekannter Weise ein Rotor 2, beispielsweise Kraftfahrzeugrad, aufgespannt. Zur Unwuchtmessung wird die Hauptwelle 7 und der Rotor 2 in einem Hochlauf vom Elektromotor 1 auf Messdrehzahl angetrieben. Während des Messlaufs werden aus der Rotorunwucht resultierende Kräfte an der Hauptwelle 2 gemessen und bezogen auf Ausgleichsebenen am Rotor 2 in Unwuchtausgleichsgrößen umgerechnet. Eine geeignete Messanordnung ist beispielsweise aus der DE 198 44 975 A1 bekannt. Zur gesteuerten Stromversorgung beim Hochlauf besitzt die Auswuchtmaschine einen Wechselspannungssteller mit einem Längsschalter S1 und einem Kommutierungsschalter S2, über welche Statorwicklungen 3, 4 des Elektromotors 1 mit Strom versorgt werden. Mit Hilfe eines vorzugsweise als Relais ausgebildeten Umschalters S3 wird die Drehrichtung des Elektromotors 1 eingestellt. Bei der in der Fig. 1 dargestellten Schaltposition des Umschalters 3 ist beispielsweise die Vorwärtsdrehrichtung, in welcher der Rotor auf Messdrehzahl gebracht wird, dargestellt. Durch einen Kondensator C, welcher in der Fig. 1 mit der Statorwicklung 4 in Reihe geschaltet wird, wird erreicht, dass die beiden Statorwicklungen 3, 4 mit einem Phasenunterschied von insbesondere 90° mit dem Motorstrom versorgt werden. Der Motorstrom wird von einer Wechselspannungsquelle Ue geliefert. Anstelle eines Kondensators können zur Änderung der Kapazität zwei oder mehr Kondensatoren verwendet werden, welche in Abhängigkeit von der Drehzahl in den Motorstromkreis geschaltet oder von diesem getrennt werden, wie es beispielsweise in der DE 100 00 235 A1 beschrieben ist.

Sowohl der Längsschalter S1 als auch der Kommutierungsschalter S2 bestehen aus zwei anti-seriell geschalteten Halbleiterschaltern. Diese Halbleiterschalter sind vorzugsweise als IGBTs ausgebildet. Es können jedoch auch MOSFETs verwendet werden. Die Leistungshalbleiterschalter besitzen eine integrierte antiparallele Diode, so dass bei negativer Polarität über dem jeweiligen Halbleiterschalter diese Diode Strom führt und keine elektrische Spannung entstehen kann. Da die Halbleiterschalter Wechselspannung sperren oder Wechselstrom beim Betrieb des Wechselspannungsstellers führen müssen und die Halbleiterschalter aber nur Spannung einer Polarität sperren oder durchschalten, sind jeweils zwei Halbleiterschalter in anti-serieller Schaltung sowohl für den Längsschalter S1 als auch für den Kommutierungsschalter S2 vorgesehen.

Bei der in der Fig. 1 dargestellten Schaltstellung des Umschalters S3 wird vom Längsschalter S1 die Wechselspannung der Wechselspannungsquelle Ue, beispielsweise die Netzspannung zum Elektromotor 1 weitergegeben. Der Kommutierungsschalter S2 wird von der Pulsweitenmodulation (PWM) 5 so angesteuert, dass er den Strom der Motorinduktivität solange übernimmt, wie der Längsschalter S1 abgeschaltet ist (synchrone Kommutierung). Hierzu werden die beiden Gates der den Längsschalter S1 bildenden Halbleiterschalter, z.B. die beiden IGBTs im Gegentakt zu den beiden Gates der den Kommutierungsschalter S2 bildenden Halbleiterschalter angesteuert. Hierbei ist sichergestellt, dass die von der Pulsweitenmodulation 5 an die Gates des Längsschalters S1 und des Kommutierungsschalters S2 gelegten Steuerspannungen nicht gleichzeitig, sondern im Wechseltakt bzw. Gegentakt geliefert werden. Durch das Tastverhältnis des PWM-Signales wird die Stärke des den Statorwicklungen 3, 4 zugeführten Motorstroms bestimmt. Die Taktfrequenz des PWM-Signals wird vorzugsweise in der Größenordnung zwischen 3 bis 10 kHz moduliert.

Um den Rotor nach dem Messlauf in einer bestimmten Position, beispielsweise Ausgleichs-Drehwinkelposition anzuhalten, wird durch den Elektromotor 1 ein Gegendrehmoment erzeugt. Hierzu wird der Umschalter S3 in Abhängigkeit von der jeweiligen Drehrichtung des Rotors 2 in eine entsprechende Schalterstellung, z.B. die oben liegende Schalterstellung in Fig. 1 gebracht. In dieser Schaltposition ist der Kondensator C mit der Statorwicklung 4 in Reihe geschaltet. Der Schalter S2 wirkt bei diesem Motorbremsbetrieb als Längsschalter und der Schalter S1 als Kommutierungsschalter. Wie beim Hochlauf werden die Statorwicklungen 3, 4 über den Wechselspannungssteller mit Wechselstrom versorgt. Dabei wird ein Gegendrehmoment erzeugt, mit welchem die Drehung des Rotors 2 und der Hauptwelle 7 abgebremst werden. Die Abbremsung kann gesteuert durch den Betrieb der Pulsweitenmodulation 5 in der Weise erfolgen, dass der Rotor 2 in der gewünschten Ausgleichs-Drehwinkelposition angehalten wird. Ferner ist es möglich, den Zeitpunkt des Umschaltens des Schalters S3 in den Motorbremsbetrieb so zu legen, dass bei bekannter Bremswirkung, welche durch das vom Elektromotor 1 erzeugte Drehmoment bewirkt wird, und in Abhängigkeit von der momentanen Drehzahl der Rotor 2 in der Ausgleichs-Drehwinkelposition angehalten wird.

Zur Steuerung des Umschalters S3 und der Pulsweitenmodulation 5 kann eine Steuereinrichtung 6 vorgesehen sein, welche mit einer Abtasteinrichtung 8 verbunden ist, durch die die jeweilige Drehwinkelposition der Hauptwelle 7 und damit des Rotors 2 und/oder die Drehzahl des Rotors 2 und der Hauptwelle 7 sowie die Drehrichtung abgetastet werden.

Beim Eindrehen des Rotors 2 aus einer Unwucht-Ausgleichs-drehwinkelposition, in welcher ein Unwuchtausgleich in einer bestimmten Ausgleichsebene schon stattgefunden hat, in eine weitere beispielsweise zweite Unwucht-Drehwinkelausgleichsposition in der gleichen oder in einer anderen Ausgleichsebene wird der Rotor nicht vom Elektromotor 1 angetrieben, sondern mit Hilfe einer von außen einwirkenden, von einer Serviceperson erbrachten Kraft, wobei der Rotor beispielsweise von Hand von der Serviceperson in Drehung versetzt wird. Der Umschalter S3 ist vorher oder gleichzeitig mit dem Beginn der Drehung des Rotors 2, gegebenenfalls gesteuert durch die Steuereinrichtung 6 in Abhängigkeit von der Drehrichtung des Rotors 2 beispielsweise in die obere Position, d.h. in die drehrichtungsabhängige Bremsposition gebracht. Ferner wird ebenfalls vorzugsweise gesteuert durch die Steuereinrichtung 6, der aus den beiden Schaltern S1 und S2 bestehende Wechselspannungssteller eingeschaltet und die von der Wechselspannungsquelle Ue oder eine durch die Pulsweitenmodulation 5 eingestellte Wechselspannung an die Statorwicklungen 3, 4 gelegt. Hierdurch wird ein entgegengesetzt zur Drehrichtung des Rotors 2 und der Hauptwelle 8 gerichtetes Gegendrehmoment vom Elektromotor 1 erzeugt. Durch die Abtasteinrichtung 8 kann die Drehrichtung erfasst werden und in Abhängigkeit davon wird der Schalter S3 in die entsprechende Position gebracht, in welcher das Gegendrehmoment entgegengesetzt zur Drehrichtung des Rotors 2 erzeugt wird.

Wie aus der Fig. 2 zu ersehen ist, wird ausgehend von einer Stopposition, beispielsweise der ersten Ausgleichsposition der Rotor 2 zum Zeitpunkt t0 durch eine von außen einwirkende Kraft, insbesondere von Hand gedreht, wobei der Rotor in Abhängigkeit von der einwirkenden Kraft eine bestimmte Drehzahl n1 annimmt und von einem Zeitpunkt t1 aus ausläuft. Im Verlauf der auslaufenden Drehung des Rotors 2 wird, nachdem der Umschalter S3 in die richtige Schaltposition gebracht worden ist, zu einem Zeitpunkt t2 der Wechselspannungssteller eingeschaltet und die das Gegendrehmoment erzeugende Wechselspannung an die Statorwicklungen 3, 4 des Elektromotors 1 gelegt. Dieses Gegendrehmoment bewirkt eine Bremsung, die zum Zeitpunkt t3 den Rotor 2 in der gewünschten zweiten Ausgleichsposition anhält. Der Elektromotor 1 wird dann abgeschaltet.

Der Bremsverlauf vom Zeitpunkt t2 bis zum Zeitpunkt t3 kann durch die Pulsweitenmodulation 5 in der Weise gesteuert werden, dass zum Zeitpunkt t3 der Rotor 2 und die Hauptwelle 7 angehalten werden. Es ist jedoch auch möglich, den Zeitpunkt t2 so zu legen, dass in Abhängigkeit von der bekannten Bremswirkung, mit welcher das vom Elektromotor 1 erzeugte Gegendrehmoment auf den Rotor 2 wirkt, und in Abhängigkeit von der Drehzahl n2 zum Zeitpunkt t2 der Bremsvorgang in der zweiten Ausgleichsposition beendet wird.

Da durch die Abtasteinrichtung 8 die Drehrichtung der Hauptwelle 7 und des Rotors 2 erkannt werden können, wird für die Eindrehung des Rotors aus der vorherigen Ausgleichsposition, beispielsweise der ersten Ausgleichsposition in die nachfolgende Ausgleichsposition, beispielsweise die zweite Ausgleichsposition, die Drehrichtung erkannt, so dass in Abhängigkeit davon der Umschalter S3 in die entsprechende Schaltposition gebracht wird, in welcher das vom Motor 1 erzeugte Drehmoment als Gegendrehmoment entgegengesetzt zur Drehrichtung der Hauptwelle 7 und des Rotors 2 wirkt.

### [Bezugszeichenliste]

- 1: Elektromotor (Einphasen-Wechselstrommotor)
- 2: Rotor (Kraftfahrzeugrad)
- 3: Statorwicklung
- 4: Statorwicklung
- 5: Pulsweitenmodulation
- 6: Steuereinrichtung
- 7: Hauptwelle
- 8: Abtasteinrichtung

- S1: Längsschalter (oder Kommutierungsschalter)
- S2: Kommutierungsschalter (oder Längsschalter)
- S3: Umschalter (Relais)

- C: ein oder mehrere Kondensatoren

## Patentansprüche

1. Verfahren zum Eindrehen eines an einer Auswuchtmaschine drehgelagerten und mittels eines Wechselstrommotors antreibbaren Rotors, insbesondere Kraftfahrzeugrades, aus einer angehaltenen ersten Unwucht-Ausgleichsposition in eine zweite Unwucht-Ausgleichsposition, bei dem der Wechselstrommotor zur Erzeugung eines der Drehrichtung des Rotors entgegengesetzt wirkenden Drehmoments eingeschaltet wird, welches einen dem Drehwinkel entsprechenden Bremsweg erzeugt, der bis zur zweiten Unwucht-Ausgleichsposition zurückgelegt wird, und der Wechselstrommotor in der zweiten Unwucht-Ausgleichsposition ausgeschaltet wird,
**dadurch gekennzeichnet, dass** der Rotor bei ausgeschaltetem Wechselstrommotor aus der angehaltenen ersten Unwucht-Ausgleichsposition durch eine von außen durch eine Bedienperson bewirkte Kraft in eine frei auslaufende Drehung angetrieben wird, und dass das vom Wechselstrommotor erzeugte Gegendrehmoment während der frei auslaufenden Drehung des Rotors eingeschaltet wird.

2. Verfahren nach Anspruch 1,
**dadurch gekennzeichnet, dass** der dem Bremsweg entsprechende Drehwinkel aus einer Bremswirkung, welche beim Abbremsen des Rotors in die vorher eingedrehte Stop-Position gemessen wurde, und der momentanen Drehzahl bei der frei auslaufenden Drehung bestimmt wird.

3. Verfahren nach Anspruch 1 oder 2,
**dadurch gekennzeichnet, dass** beim Bremsvorgang der Wechselstrommotor mittels eines Wechselspannungsteilers mit Wechselstrom versorgt wird.

4. Verfahren nach einem der Ansprüche 1 bis 3,
**dadurch gekennzeichnet, dass** der Rotor beim Eindrehen in die weitere Unwucht-Ausgleichsposition von Hand angetrieben wird.

5. Vorrichtung zum Eindrehen eines an einer Auswuchtmaschine drehgelagerten und mittels eines Einphasen-Wechselstrommotors (1) antreibbaren Rotors (2), insbesondere Kraftfahrzeugrades, in eine Unwuchtausgleichsposition mit einem Wechselspannungssteller im Motorstromkreis zur Durchführung eines Verfahrens nach einem der Patentansprüche 1 bis 4, wobei der Wechselspannungssteller einen Längsschalter (S1) und einen Kommutierungsschalter (S2) umfasst, wobei Längsschalter (S1) und Kommutierungsschalter (S2) des Wechselspannungsstellers von jeweils zwei anti-seriell geschalteten Halbleiterschaltern gebildet sind.

6. Vorrichtung nach Anspruch 5,
**dadurch gekennzeichnet, dass** der Einphasen-Wechselstrommotor zwei Statorwicklungen (3, 4) und wenigstens einen je nach Drehrichtung mit einer der beiden Statorwicklungen in Reihe geschalteten Kondensator (C) für eine phasenverschobene Stromversorgung aufweist.

7. Vorrichtung nach Anspruch 5 oder 6,
**dadurch gekennzeichnet, dass** der Kondensator (C) mittels eines Umschalters (S3) mit einer der beiden Statorwicklungen (3, 4) in Reihe schaltbar ist.

8. Vorrichtung nach einem der Ansprüche 5 bis 7,
**dadurch gekennzeichnet, dass** die beiden Statorwicklungen (3, 4) um 90° phasenverschoben mit Strom versorgt sind.

9. Vorrichtung nach einen der Ansprüche 5 bis 8,
**dadurch gekennzeichnet, dass** die Halbleiterschalter als MOSFETs oder IGBTs ausgebildet sind.

## Claims

1. Method for turning a rotor, in particular a motor vehicle wheel, which is rotationally mounted on a balancing machine and can be driven by means of an AC motor, from a stopped first imbalance compensation position into a second imbalance compensation position, the AC motor being switched on to generate a torque acting in the opposite direction to the direction of rotation of the rotor and generating a braking distance corresponding to the angle of rotation, said angle being the distance travelled up to the second imbalance compensation position, and the AC motor being switched off in the second imbalance compensation position,
**characterized in that** with the AC motor switched off, the rotor is driven from the stopped first imbalance compensation position into a freewheeling rotation by means of a force applied externally by an operator, and that the reaction torque generated by the AC motor is switched on during the freewheeling rotation of the rotor.

2. Method according to Claim 1,
**characterized in that** the angle of rotation corresponding to the braking distance is determined from a braking effect that was measured when slowing down the rotor into the previously turned position and from the instantaneous rotational speed of the free running rotation.

3. Method according to Claim 1 or 2,
**characterized by the fact that** during the braking process the AC motor is supplied with AC power by means of an AC voltage divider.

4. Method according to any one of Claims 1 to 3,
**characterized in that** the rotor is driven manually when being turned into the additional imbalance compensation position.

5. Device for turning a rotor (2), in particular a motor vehicle wheel, which is rotationally mounted on a balancing machine and can be driven by means of an AC motor (1) into an imbalance compensation position, having an AC voltage actuator in the motor power circuit for carrying out a method according to any of the Claims 1 to 4, said AC voltage actuator comprising a longitudinal switch (S1) and a commutation switch (S2), wherein the longitudinal switch (S1) and commutation switch (S2) of the AC voltage actuator are each formed by two semiconductor switches connected in anti-series.

6. Device according to Claim 5,
**characterized in that** the single-phase AC motor comprises two stator windings (3, 4) and at least one capacitor (C) connected in series to either of the two stator windings depending on the direction of rotation, for providing a phase-shifted power supply.

7. Device according to Claim 5 or 6,
**characterized in that** the capacitor (C) can be connected in series with one of the two stator windings (3, 4) by means of a changeover switch (S3).

8. Device according to any one of Claims 5 to 7,
**characterized in that** the two stator windings (3, 4) are supplied with power phase-shifted by 90°.

9. Device according to any one of Claims 5 to 8,
**characterized in that** the semiconductor switches are implemented as MOSFETs or IGBTs.

## Revendications

1. Procédé pour indexer un rotor monté sur palier rotatif sur une machine à équilibrer et pouvant être entraîné à l'aide d'un moteur à courant alternatif, en particulier une roue de véhicule à moteur, depuis une première position d'équilibrage de balourd arrêtée dans une seconde position d'équilibrage de balourd, dans lequel le moteur à courant alternatif est mis en marche pour générer un couple de rotation agissant dans le sens opposé au sens de rotation du rotor, lequel génère une distance de freinage correspondant à l'angle de rotation, qui est parcourue jusqu'à la seconde position d'équilibrage de balourd, et le moteur à courant alternatif est arrêté dans la seconde position d'équilibrage de balourd,
**caractérisé en ce que** le rotor, à l'état arrêté du moteur à courant alternatif, est entraîné dans une rotation libre depuis la première position d'équilibrage de balourd arrêtée par une force exercée de l'extérieur par un opérateur, et que le couple de rotation antagoniste généré par le moteur à courant alternatif pendant la rotation libre du rotor est activé.

2. Procédé selon la revendication 1,
**caractérisé en ce que** l'angle de rotation correspondant à la distance de freinage est déterminé sur la base d'un effet de freinage, lequel est mesuré lors du freinage du rotor dans la position d'arrêt indexée auparavant, et de la vitesse de rotation momentanée lors de la rotation libre.

3. Procédé selon la revendication 1 ou 2,
**caractérisé en ce que** lors de l'opération de freinage, le moteur à courant alternatif est alimenté en courant alternatif à l'aide d'un diviseur de tension alternative.

4. Procédé selon l'une des revendications 1 à 3,
**caractérisé en ce que** le rotor est entraîné à la main lors de l'indexage dans la position d'équilibrage de balourd supplémentaire.

5. Dispositif pour indexer un rotor (2) monté sur palier rotatif sur une machine à équilibrer et pouvant être entraîné à l'aide d'un moteur (1) à courant alternatif monophasé, en particulier une roue de véhicule à moteur, dans une position d'équilibrage de balourd, avec un régulateur de tension alternative dans le circuit électrique du moteur pour l'exécution d'un procédé selon l'une des revendications 1 à 4, sachant que le régulateur de tension alternative comporte un commutateur continu (S1) et un commutateur de commutation (S2), sachant que le commutateur continu (S1) et le commutateur de commutation (S2) du régulateur de tension alternative sont formés respectivement par deux interrupteurs à semiconducteurs couplés en antisérie.

6. Dispositif selon la revendication 5,
**caractérisé en ce que** le moteur à courant alternatif monophasé comporte deux enroulement de stator (3, 4) et au moins un condensateur (C) couplé en série avec l'un des deux enroulements de stator selon le sens de rotation pour une alimentation en courant électrique à décalage de phase.

7. Dispositif selon la revendication 5 ou 6,
**caractérisé en ce que** le condensateur (C) peut être couplé en série avec l'un des deux enroulements de stator (3, 4) à l'aide d'un commutateur (S3).

8. Dispositif selon l'une des revendications 5 à 7,
**caractérisé en ce que** les deux enroulements de stator (3, 4) sont alimentés en courant électrique avec un décalage de phase de 90°.

9. Dispositif selon l'une des revendications 5 à 8,
**caractérisé en ce que** les interrupteurs à semiconducteurs se présentent sous la forme de transistor à effet de champ métal-oxyde-semiconducteurs (MOSFET) ou de transistor bipolaire à grille isolée (IGBT).
